(19) Europäisches Patentamt
European Patent Office
Office européen des brevets

(11) EP 3 917 024 A1

(12) DEMANDE DE BREVET EUROPEEN

(43) Date de publication:
01.12.2021 Bulletin 2021/48

(51) Int Cl.:
H04B 7/0413 (2017.01)  G06N 3/02 (2006.01)

(21) Numéro de dépôt: 21175998.0

(22) Date de dépôt: 26.05.2021

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 29.05.2020 FR 2005670

(71) Demandeur: Commissariat à l'Energie Atomique
et aux Energies
Alternatives
75015 Paris (FR)

(72) Inventeurs:
• BICAIS, Simon
38054 GRENOBLE CEDEX 09 (FR)
• FALEMPIN, Alexis
38054 GRENOBLE CEDEX 09 (FR)
• DORE, Jean-Baptiste
38054 GRENOBLE CEDEX 09 (FR)

(74) Mandataire: Marks & Clerk France
Immeuble "Visium"
22, avenue Aristide Briand
94117 Arcueil Cedex (FR)

(54) **METHODE DE DEMODULATION PAR APPRENTISSAGE AUTOMATIQUE POUR RECEPTEURS MIMO A DETECTION D'ENERGIE**

(57) Méthode de réception d'une pluralité de signaux distincts respectivement émis par une pluralité d'antennes d'émission, comprenant les étapes de :
Recevoir une pluralité de signaux respectifs sur une pluralité d'antennes de réception,
Appliquer une détection d'énergie à chacun des signaux reçus,

Démoduler conjointement les signaux reçus au moyen d'un algorithme d'apprentissage automatique préalablement entraîné pour apprendre à démoduler chaque symbole modulé du signal émis à partir des contributions respectives de ce symbole modulé reçues sur la pluralité d'antennes de réception.

FIG.1

**Description**

L'invention concerne le domaine ses systèmes de communication MIMO (Multiple Input Multiple Output), c'est-à-dire pour lesquels l'émetteur et le récepteur comprennent chacun plusieurs antennes et donc plusieurs voies d'émission/réception.

L'invention concerne plus généralement les systèmes de communication sans fil haut-débit fonctionnant sur des bandes de fréquences élevées, en particulier des fréquences du spectre dit millimétrique de l'ordre de 60 à 300 GHz.

Les applications visées dans ce domaine concernent notamment les liaisons haut débit entre un point d'accès et un réseau cœur ou les communications à faible distance à haut débit.

Une première solution connue pour augmenter le débit d'un système de communication sans fil consiste à réaliser un multiplexage fréquentiel pour mettre en œuvre une transmission simultanée sur des fréquences différentes. Cette solution permet d'augmenter le débit de transmission d'un facteur égal au nombre de canaux fréquentiels, cependant elle présente plusieurs inconvénients. Elle nécessite tout d'abord de disposer d'une bande de fréquence large disponible. Par ailleurs, elle implique la mise en œuvre de bancs de filtres en émission et en réception qui peuvent introduire des pertes lors de la canalisation des signaux mais aussi des interférences inter-canaux. En outre, ce type de solution nécessite le plus souvent une architecture de réception cohérente qui est très sensible au bruit de phase. En effet, les oscillateurs de fréquence associés à chaque canal fonctionnent à haute fréquence. Les dégradations dues au bruit de phase nécessitent de mettre en œuvre un algorithme de démodulation adapté plus complexe pour corriger ces imperfections.

Une autre solution consiste à réaliser un multiplexage spatial en utilisant plusieurs antennes en émission et plusieurs antennes en réception. Ce type de système est connu sous l'acronyme MIMO (Multiple Input Multiple Output). Il présente l'avantage de permettre une augmentation du débit d'un facteur égal au nombre d'antennes en émission mais se heurte aux problèmes d'interférence spatiale entre les signaux émis par les différentes antennes.

Le document [1] présente un système de transmission MIMO pour lequel le récepteur implémente un détecteur d'amplitude des signaux reçus. Le fait de mettre en œuvre une détection d'amplitude (ou détection d'énergie) en réception introduit des non linéarités dans le chaine de transmission. L'algorithme de démodulation proposé dans [1] est basé sur un critère du maximum de vraisemblance qui nécessite une estimation précise des paramètres du canal, c'est-à-dire de la fonction de transfert globale de la chaine de transmission incluant le modèle du canal de propagation, les interférences spatiales entre signaux reçus par différentes antennes et les non linéarités dues à la détection d'enveloppe en réception.

Le document [2] propose un état de l'art de l'utilisation d'algorithmes d'apprentissage automatique, basés sur des réseaux de neurones, pour réaliser un démodulateur. Les solutions proposées dans [2] se limitent aux systèmes mono-voie c'est-à-dire ne comprenant qu'une antenne en émission et en réception.

Le document [3] propose une autre application de l'utilisation de réseaux de neurones pour réaliser une détection de spectre, c'est-à-dire une détection de l'occupation de différentes bandes de fréquence d'un spectre de largeur donnée.

Le document [4] propose un démodulateur basé sur un réseau de neurones pour un système de communication MIMO. Cependant, la solution proposée dans ce document considère un modèle linéaire, c'est-à-dire une relation linéaire entre les symboles reçus en entrée du démodulateur et les symboles émis. De plus, l'architecture proposée est développée en prenant en considération la connaissance du canal ainsi que la nature linéaire du modèle. Il faut donc estimer le canal au niveau du récepteur pour utiliser la solution du document [4] dans un système pratique. La solution proposée n'est donc pas adaptée à des systèmes non linéaires

La présente invention propose un nouveau type de récepteur pour des systèmes de communication MIMO qui met en œuvre une détection d'énergie et un algorithme de démodulation basé sur un apprentissage automatique, par exemple au moyen de réseaux de neurones artificiels.

L'utilisation de réseaux de neurones présente l'avantage de prendre en compte les non linéarités introduites par la chaine de transmission et d'exploiter les interférences spatiales pour détecter les symboles émis sur chaque voie d'émission sans nécessité d'implémenter une estimation de canal précise.

Par ailleurs, l'invention propose d'améliorer encore les performances du démodulateur en lui associant un code correcteur d'erreurs du type code algébrique qui peut être adapté au multiplexage spatial.

L'invention a pour objet une méthode de réception d'une pluralité de signaux distincts respectivement émis par une pluralité d'antennes d'émission, comprenant les étapes de :

- Recevoir une pluralité de signaux respectifs sur une pluralité d'antennes de réception,

- Appliquer une détection d'énergie à chacun des signaux reçus,

- Démoduler conjointement les signaux reçus au moyen d'un algorithme d'apprentissage automatique préalablement entrainé pour apprendre à démoduler chaque symbole modulé du signal émis à partir des contributions respectives de ce symbole modulé reçues sur la pluralité d'antennes de réception.

Selon un aspect particulier de l'invention, les signaux émis sont modulés en amplitude.

Selon un aspect particulier de l'invention, l'algorithme d'apprentissage automatique est mis en œuvre au moyen d'au moins un réseau de neurones artificiel recevant en entrée les signaux respectifs reçus sur les antennes de réception et fournissant en sortie une estimée des symboles émis.

Selon un aspect particulier de l'invention, un réseau de neurones artificiel distinct est mis en œuvre pour démoduler chaque signal émis par une antenne d'émission distincte à partir de tous les signaux respectifs reçus sur les antennes de réception.

Selon un aspect particulier de l'invention, au moins un réseau de neurones artificiel est mis en œuvre pour démoduler conjointement les signaux émis par plusieurs antennes d'émission.

Selon un aspect particulier de l'invention, la méthode comprend une phase préalable d'entrainement de l'algorithme d'apprentissage automatique sur des symboles pilotes émis par la pluralité d'antennes d'émission.

Selon un aspect particulier de l'invention, l'algorithme d'apprentissage automatique est entrainé de manière à minimiser un taux d'erreurs entre les symboles démodulés et les symboles émis.

Selon un aspect particulier de l'invention, les signaux émis sont protégés au moyen d'un code correcteur d'erreur et la méthode comprend en outre une étape de décoder les symboles démodulés au moyen d'un décodeur canal appliqué aux symboles démodulés sur les différentes voies de réception concaténés en série.

Selon un aspect particulier de l'invention, les signaux émis sont protégés au moyen d'un code correcteur d'erreur et la méthode comprend en outre une étape de décoder en parallèle les symboles démodulés sur chaque voie de réception, au moyen de plusieurs décodeurs respectifs.

Selon un aspect particulier de l'invention, le code correcteur est un code algébrique, par exemple un code BCH.

L'invention a aussi pour objet un récepteur multi-voies comprenant une pluralité d'antennes de réception pour recevoir des signaux distincts respectivement émis par une pluralité d'antennes d'émission, le récepteur comprenant un détecteur d'énergie par voie de réception et un démodulateur configuré pour démoduler conjointement les signaux reçus au moyen d'un algorithme d'apprentissage automatique préalablement entrainé pour apprendre à démoduler un symbole modulé du signal émis à partir des contributions respectives de ce symbole modulé reçues sur la pluralité d'antennes de réception.

Dans une variante de réalisation, le récepteur selon l'invention comporte un nombre d'antennes de réception supérieur ou égal au nombre d'antennes d'émission.

Dans une variante de réalisation, le démodulateur comporte un nombre de sorties égal au nombre d'antennes d'émission.

Dans une variante de réalisation, le récepteur selon l'invention comporte en outre un démultiplexeur pour concaténer en série les symboles démodulés sur les différentes sorties du démodulateur et un décodeur canal configuré pour décoder les symboles en sortie du démultiplexeur.

Dans une variante de réalisation, le récepteur selon l'invention comporte en outre un décodeur canal distinct configuré pour décoder les symboles fournis sur chaque sortie respective du démodulateur.

Selon un aspect particulier de l'invention, le taux de codage de chaque décodeur canal est paramétré indépendamment.

D'autres caractéristiques et avantages de la présente invention apparaîtront mieux à la lecture de la description qui suit en relation aux dessins annexés suivants.

[Fig. 1] la figure 1 représente un schéma fonctionnel d'un système de transmission incluant un récepteur selon l'invention,

[Fig. 2] la figure 2 représente un schéma d'une chaine analogique de réception d'une voie d'un récepteur selon l'invention,

[Fig. 3] la figure 3 représente un schéma illustrant le phénomène d'interférence spatiale dans un système de transmission selon l'invention,

[Fig. 4] la figure 4 représente un mode de réalisation d'un démodulateur selon l'invention utilisant plusieurs réseaux de neurones artificiels,

[Fig. 5] la figure 5 représente un exemple d'un réseau de neurones artificiels configuré pour réaliser un démodulateur selon l'invention,

[Fig. 6] la figure 6 représente des résultats comparatifs de performances entre l'invention et une solution de l'état de l'art pour un récepteur à 4 antennes,

[Fig. 7] la figure 7 représente une première variante de réalisation d'un système de transmission selon l'invention utilisant un code correcteur commun pour toutes les voies de réception,

[Fig. 8] la figure 8 représente une seconde variante de réalisation d'un système de transmission selon l'invention utilisant un code correcteur par voie de réception,

[Fig. 9] la figure 9 représente un organigramme détaillant les étapes de mise en œuvre de la méthode de réception selon l'un quelconque des modes de réalisation de l'invention,

[Fig. 10] la figure 10 représente un organigramme détaillant une phase préalable d'entrainement du démodulateur

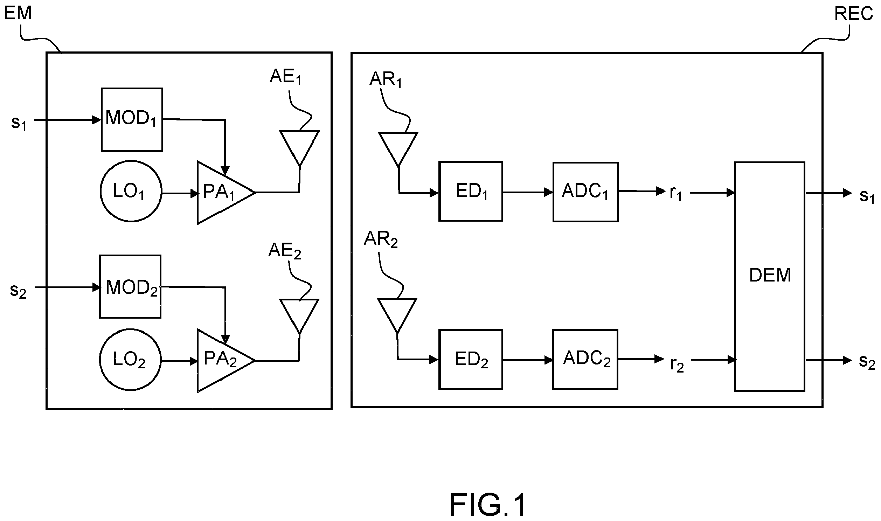

La figure 1 représente un schéma fonctionnel d'un système de transmission multi-voies selon l'invention. L'émetteur EM du système comprend plusieurs voies d'émission comprenant chacune un modulateur d'amplitude $MOD_1,MOD_2$, un amplificateur $PA_1,PA_2$, un oscillateur de fréquence $LO_1,LO_2$ et une antenne $AE_1,AE_2$. Les signaux émis sont modulés via une modulation d'amplitude, par exemple une modulation en position d'impulsions (PPM) ou une modulation à largeur d'impulsions (PWN) ou une modulation d'impulsions en amplitude (PAM) ou une modulation d'amplitude de type « On-Off Keying » (OOK). Les signaux $s_1,s_2$ émis sur chaque voie d'émission sont indépendants.

Le récepteur REC comporte également plusieurs voies de réception comprenant chacune une antenne de réception $AR_1,AR_2$, un détecteur d'énergie ou détecteur d'enveloppe $ED_1,ED_2$ et un convertisseur analogique numérique $ADC_1,ADC_2$. Le nombre de voies de réception est au moins égal au nombre de voies d'émission mais il peut être supérieur. Les signaux numérisés sur chaque voie $r_1,r_2$ sont fournis en entrée d'un démodulateur numérique DEM qui réalise une démodulation conjointe des signaux pour restituer les symboles émis $s_1,s_2$ sur chaque voie d'émission. Autrement dit, le nombre de sorties du démodulateur DEM est égal au nombre de voies d'émission.

Le démodulateur numérique DEM peut être réalisé sous forme logicielle et/ou matérielle notamment en utilisant un ou plusieurs processeur(s) et une ou plusieurs mémoire(s). Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

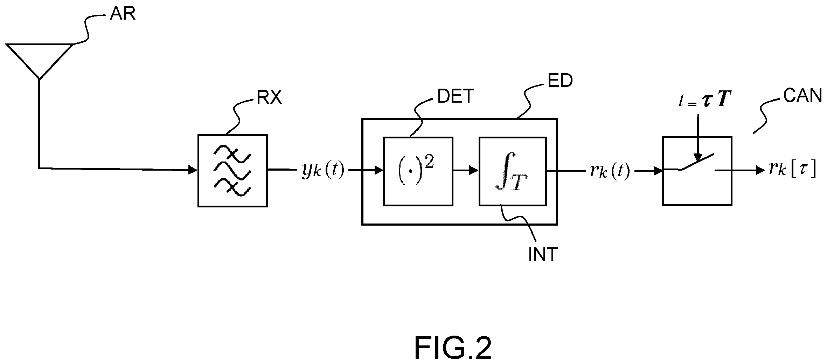

La figure 2 schématise une chaine de réception analogique d'une voie de réception du récepteur selon l'invention.

Les signaux reçus par l'antenne AR sont traités par une chaine de conversion radiofréquence RX qui comporte un ou plusieurs filtre(s) et/ou un ou plusieurs amplificateur(s). Un détecteur d'énergie ED est ensuite appliqué au signal transposé en bande de base. Ce détecteur d'énergie ED comporte un détecteur quadratique DET qui réalise une fonction analogique équivalent à la mise au carré du signal reçu. Le détecteur quadratique DET est, par exemple, réalisé au moyen d'une diode ou d'un dispositif auto-mélangeur. Le détecteur d'énergie ED comporte aussi un intégrateur temporel INT. La durée d'intégration est préférentiellement égale à un multiple de la durée d'un symbole $T_s$ du signal modulé.

Les signaux $r_k(t)$ obtenus en sortie du détecteur d'énergie ED sont ensuite numérisés (ou échantillonnés) par un convertisseur analogique numérique CAN pour produire des symboles numériques qui sont ensuite fournis au démodulateur numérique DEM.

L'utilisation d'un détecteur d'énergie ED présente l'avantage de limiter l'influence du bruit de phase mais présente l'inconvénient d'introduire des non linéarités dans la chaine de traitement, nécessitant une démodulation adaptée.

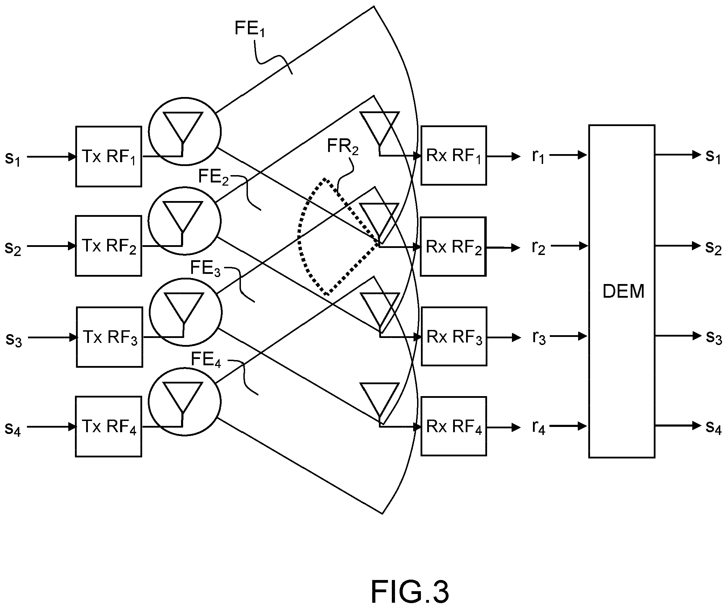

La figure 3 schématise un autre exemple de système de transmission selon l'invention dans lequel le nombre de voies d'émission et de réception est égal à 4. Sur la figure 3, on a représenté schématiquement les faisceaux $FE_1,FE_2,FE_3,FE_4$ émis respectivement par les quatre antennes d'émission. Les antennes de l'émetteur sont préférentiellement des antennes directives. Cependant, en fonction des distances entre l'émetteur et le récepteur, des distances entre les antennes d'émission et des distances entre les antennes de réception, le signal émis par une antenne d'émission peut être reçu par plusieurs antennes de réception.

Par exemple, l'antenne de réception $AR_2$ reçoit potentiellement des contributions de signaux émis respectivement par les trois premières antennes d'émission comme cela est schématisé sur la figure 2 par le faisceau $FR_2$ reçu par la deuxième antenne de réception.

Ainsi, ce type de système multi-voies induit de l'interférence spatiale entre les canaux de propagation reliant une antenne d'émission à une antenne de réception.

L'interférence spatiale entraine de la diversité, c'est-à-dire qu'un symbole est transmis sur plusieurs canaux. L'interférence spatiale entraine également de l'ambiguïté, c'est-à-dire que plusieurs symboles ayant des niveaux d'énergie similaires sont reçus par une même antenne de réception, ce qui crée de l'interférence.

Un objectif du démodulateur DEM est d'estimer les symboles émis à partir des signaux reçus sur chaque voie malgré l'interférence spatiale élevée.

Dans le cas d'un démodulateur classique appliqué sur chaque voie de réception de façon indépendante, l'interférence spatiale est considérée et traitée comme du bruit, un tel démodulateur doit alors être paramétré avec un seuil de détection optimal prenant en compte cette interférence.

Une autre solution consiste à traiter toutes les voies de réception conjointement en considérant l'interférence spatiale non plus come du bruit mais comme de l'information.

Une solution de démodulation conjointe connue est basée sur un algorithme du maximum de vraisemblance. Ce type d'algorithme nécessite d'avoir une estimée précise de la fonction de transfert du canal de propagation. Par ailleurs il est basé sur l'hypothèse que le canal est de type Gaussien.

L'utilisation de détecteurs d'énergie sur chaque voie de réception rend caduque l'hypothèse du canal Gaussien car ils introduisent des non linéarités dans les signaux fournis en entrée du démodulateur.

Pour ces raisons, l'invention propose un démodulateur basé sur un algorithme d'apprentissage automatique du type réseau de neurones artificiels.

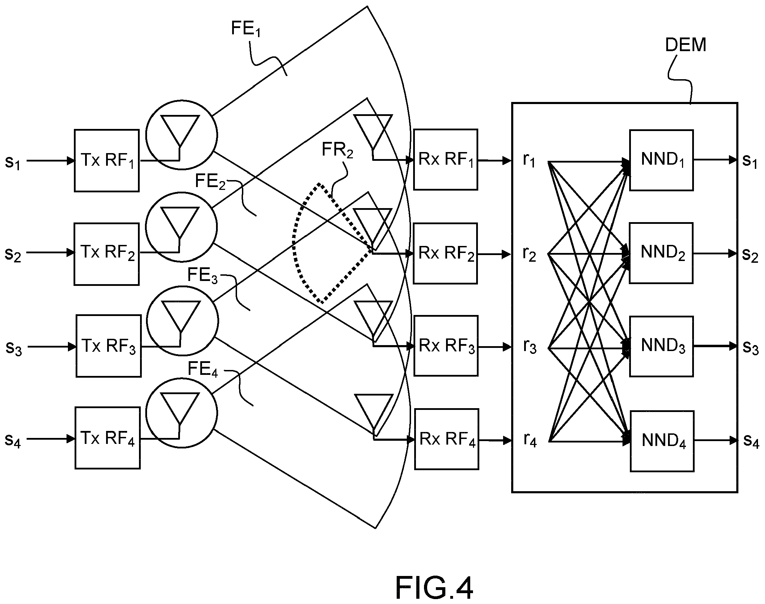

La figure 4 schématise un mode de réalisation du démodulateur DEM pour lequel un réseau de neurones artificiels $NND_1, NND_2, NND_3, NND_4$ distinct est utilisé pour estimer séparément les symboles $s_1, s_2, s_3, s_4$ respectivement émis sur les quatre voies d'émission.

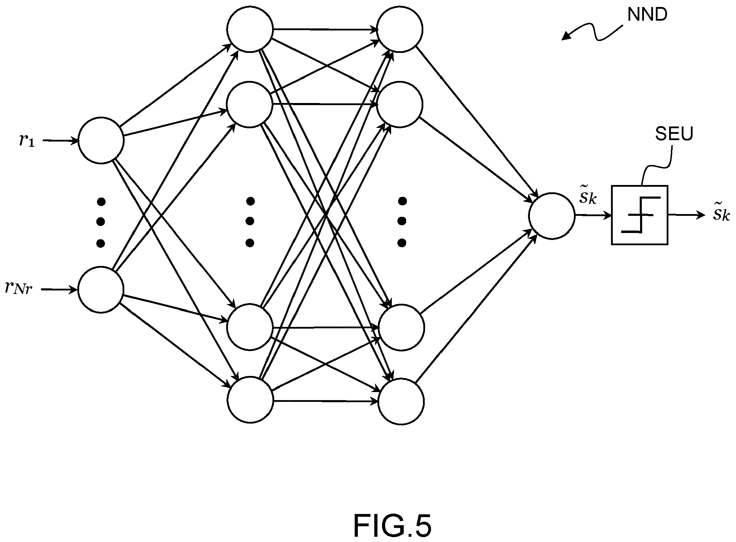

Un exemple de réseau de neurones NND pour réaliser la démodulation des symboles émis sur une voie d'émission est représenté à la figure 5.

La couche d'entrée du réseau de neurones NND comporte un nombre de neurones égal au nombre de voies de réception pour recevoir simultanément les signaux numérisés sur chaque voie $r_1,..r_{Nr}$. Le réseau de neurones NND comporte une ou plusieurs couches cachées, par exemple deux couches cachées sur l'exemple de la figure 5, et une couche de sortie à un seul neurone.

Le réseau de neurones NND est du type totalement connecté (fully connected en anglais), c'est-à-dire que chaque neurone d'une couche est connecté à tous les neurones de la couche précédente et à tous les neurones de la couche suivante. Il constitue un perceptron multicouche.

Les neurones des couches cachées mettent en œuvre une fonction d'activation particulière, par exemple une fonction de rectification linéaire ou fonction ReLU (Rectified Linear Unit).

Le neurone de la couche de sortie fournit une prédiction $\widetilde{s_k}$ de chaque symbole émis sur une voie d'émission. Cette prédiction est homogène avec une probabilité de recevoir le symbole $s_k$ sachant le vecteur $r = [r_1,..r_{Nr}]$ des signaux en entrée du réseau. Les symboles estimés par la couche de sortie peuvent être des symboles modulés en amplitude ou peuvent être des symboles binaires avant modulation. Dans ce second cas, la fonction d'activation mise en œuvre par le neurone de la couche de sortie est, par exemple, une fonction sigmoïde. Une étape de seuillage SEU permet de convertir la prédiction $\widetilde{s_k}$ en symbole binaire $\widehat{s_k}$.

Si les symboles estimés par la couche de sortie sont des symboles modulés sur un nombre d'états différent de deux, la fonction d'activation est adaptée en conséquence et l'étape de seuillage SEU est remplacée par un convertisseur symboles vers bits adapté au type de modulation visé. Ce convertisseur est, par exemple, réalisé en utilisant plusieurs seuils différents.

Le nombre de couches cachées est un paramètre qui dépend notamment du nombre de voies de réception. Par exemple, pour quatre antennes de réception, le nombre de couches cachées peut être égal à 2. Pour huit antennes de réception, le nombre de couches cachées peut être égal à 4. De façon générale, plus le nombre d'antennes de réception est élevé, plus le nombre d'observations en entrée du réseau de neurones l'est également, chaque observation comportant potentiellement des contributions de signaux émis sur plusieurs voies d'émission. En augmentant le nombre de couches cachées du réseau de neurones, cela permet d'augmenter le nombre de paramètres à optimiser du réseau et donc d'améliorer l'optimisation en présence d'interférence spatiale.

De même le nombre de neurones d'une couche cachée est paramétrable.

Les réseaux de neurones utilisés respectivement pour démoduler chaque signal associé à une voie d'émission ne sont pas forcément identiques et peuvent être paramétrés différemment.

Chaque réseau de neurones NND est entrainé lors d'une phase préalable d'entrainement réalisée au moyen de symboles pilotes.

Autrement dit, cette phase d'entrainement consiste à émettre, sur chaque voie d'émission, une séquence de symboles pilotes et à entrainer chaque réseau NND à reconnaitre les symboles émis à partir de l'ensemble des observations $r = [r_1,..r_{Nr}]$ reçues sur les antennes du récepteur. La phase d'entrainement ou apprentissage est typiquement réalisée au moyen d'un algorithme de rétro-propagation en utilisant en sortie du réseau une fonction de coût visant à minimiser l'erreur entre chaque symbole émis et le symbole estimé par la couche de sortie.

Lorsque les symboles estimés par le réseau sont des symboles binaires et que la modulation d'amplitude utilisée est une modulation de type « On-Off Keying » (OOK), la fonction de coût utilisée est, par exemple, une fonction binaire d'entropie croisée définie par la relation suivante :

$$J = \frac{1}{M} \sum_{k=1}^{M} [\frac{s_k}{\sqrt{2}} \log(\widetilde{s_k}) + \left(1 - \frac{s_k}{\sqrt{2}}\right) \log(1 - \widetilde{s_k})]$$

M est le nombre de symboles pilote, $s_k$ est le symbole émis et $\widetilde{s_k}$ est le symbole estimé par le réseau de neurones.

Si les symboles estimés sont non binaires ou que la modulation d'amplitude est différente d'une modulation OOK, la fonction de coût est adaptée en conséquence, il peut s'agir par exemple d'une fonction d'erreur quadratique moyenne calculée entre les symboles pilotes émis et les symboles estimés.

Lors de l'apprentissage, les coefficients synaptiques du réseau de neurones sont optimisés au moyen d'un algorithme d'optimisation, par exemple du type descente du gradient ou optimiseur Adam.

Une variante de réalisation de l'invention consiste à mettre en œuvre un ou plusieurs réseaux de neurones aptes à estimer conjointement plusieurs symboles correspondants à plusieurs voies d'émission. Par exemple, il est possible d'utiliser un seul réseau de neurones (au lieu d'un réseau par voie d'émission) qui comporte une couche de sortie ayant un nombre de neurones égal au nombre de voies d'émission.

Dans ce cas, chaque neurone de sortie vise à estimer les symboles émis sur une voie d'émission.

Une solution intermédiaire entre les deux modes de réalisation précités consiste à utiliser plusieurs réseaux de neurones, chaque réseau étant destiné à estimer les symboles émis par au moins deux voies d'émission et comportant donc au moins deux sorties.

Un avantage à l'utilisation d'un démodulateur à base de réseaux de neurones artificiels est qu'il est capable de prendre en compte les non linéarités introduites notamment par les détecteurs d'énergie et par l'interférence spatiale lors de la phase d'apprentissage et sans nécessité d'estimer séparément la fonction de transfert du canal de propagation.

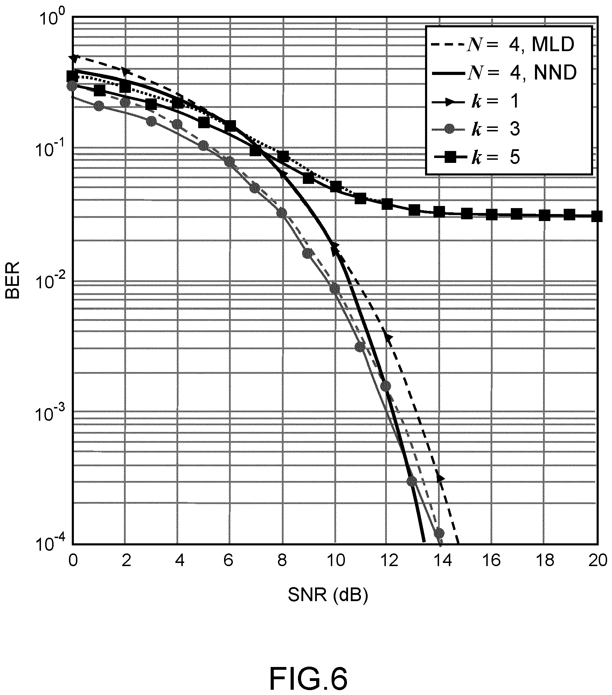

La figure 6 représente plusieurs résultats de simulation comparatifs permettant d'illustrer l'apport de l'invention par rapport à un démodulateur basé sur un algorithme du maximum de vraisemblance (MLD).

Les résultats illustrés à la figure 6 sont des courbes de taux d'erreur bits en sortie de démodulation en fonction d'un rapport signal à bruit exprimé en dB. Ils sont obtenus par simulation pour un système de transmission comportant 4 antennes en émission et 4 antennes en réception.

Trois niveaux d'interférence spatiale sont simulés et pour chaque niveau d'interférence, la courbe en traits pointillés correspond à une démodulation basée sur un algorithme du maximum de vraisemblance (MLD) et la courbe en traits pleins correspond à une démodulation basée sur un ou plusieurs réseaux de neurones (NND).

Le niveau d'interférence est défini par le nombre K d'antennes de réception qui reçoivent au moins une partie du faisceau émis par une antenne d'émission.

Autrement dit, K=1 correspond à un niveau d'interférence spatiale nul pour lequel chaque antenne de réception ne reçoit que les signaux émis par une seule antenne d'émission correspondante.

K= 3 correspond à un premier niveau d'interférence spatiale non nul pour lequel chaque antenne de réception reçoit les signaux émis par l'antenne d'émission en vis-à-vis et au maximum une antenne d'émission voisine de l'antenne en vis-à-vis, soit trois antennes au maximum.

K=5 correspond à un second niveau d'interférence spatiale non nul pour lequel chaque antenne de réception reçoit les signaux émis par l'antenne d'émission en vis-à-vis et au maximum deux antennes d'émission voisines de l'antenne en vis-à-vis, soit cinq antennes au maximum.

En l'absence d'interférence spatiale (K=1), les résultats obtenus avec un démodulateur selon l'invention présentent un gain de performances aussi bien à faible rapport signal à bruit qu'à fort signal à bruit. Cela est dû au fait que l'algorithme à base de réseaux de neurones prend en compte les non linéarités dues à l'introduction de détecteurs d'énergie contrairement à l'algorithme du maximum de vraisemblance qui fonctionne avec une hypothèse de canal de propagation Gaussien.

En présence d'interférence spatiale (K=3 ou 5) les résultats sont proches entre les deux méthodes.

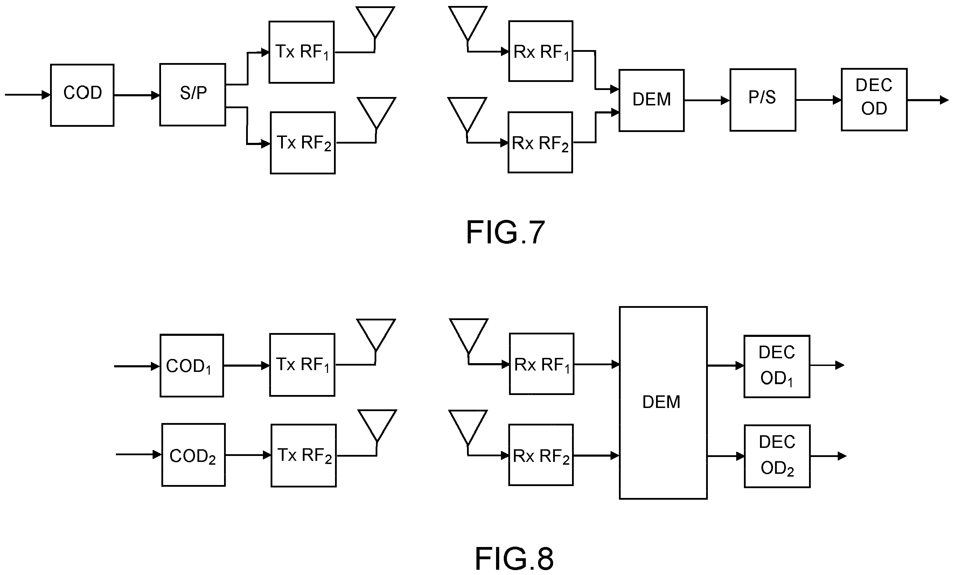

Une variante de réalisation de l'invention consiste à ajouter un code correcteur d'erreurs pour protéger les données transmises contre les perturbations du canal de transmission. Les figures 7 et 8 schématisent deux exemples de système de transmission selon cette variante de réalisation.

La figure 7 schématise un exemple de réalisation pour lequel un codeur canal COD est appliqué en émission aux données binaires à émettre qui sont ensuite distribuées sur les différentes voies d'émission au moyen d'un convertisseur série/parallèle S/P. La modulation peut être réalisée avant ou après la conversion série parallèle. En réception, un convertisseur parallèle série est inséré en sortie du démodulateur DEM pour fournir une séquence de symboles binaires à un décodeur canal DECOD.

Le code correcteur choisi est par exemple un code algébrique, en particulier un code de type BCH.

La figure 8 schématise un autre exemple de réalisation pour lequel un code correcteur distinct est appliqué sur chaque voie d'émission. Un avantage de cette variante est que le taux de codage peut être choisi indépendamment pour chaque voie. Par exemple, le taux de codage peut être adapté au niveau d'interférence spatial subi par chaque antenne de réception.

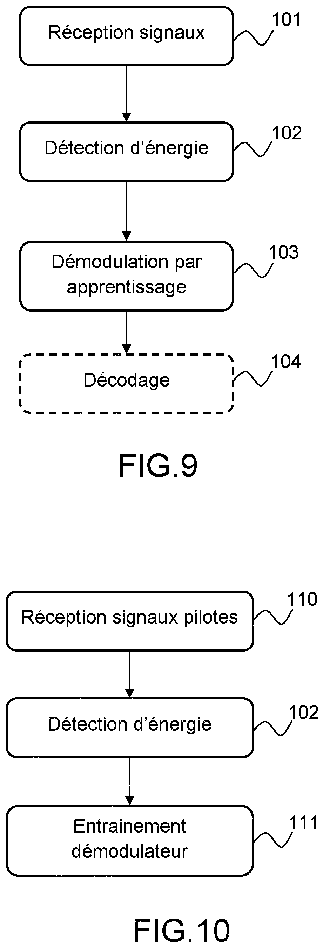

La figure 9 représente un organigramme détaillant les étapes de mise en œuvre de la méthode de réception de signaux selon l'invention.

Les signaux émis par un émetteur multi-voies sont reçus par le récepteur multi-voies à l'étape 101. Sur chaque voie de réception, une détection d'énergie 102 est appliquée puis une démodulation conjointe par apprentissage automatique 103 est appliquée aux observations fournies à un instant par chaque antenne de réception. Optionnellement, une étape de décodage 104 est appliquée si un code correcteur a été utilisé à l'émission.

L'algorithme de démodulation est optimisé à partir d'une phase d'apprentissage préalable représentée à la figure 10.

Cette phase d'apprentissage consiste à émettre des signaux pilotes 110 qui sont reçus par le récepteur multi-voies. La détection d'énergie 102 est appliquée à l'identique à ces signaux reçus par chaque antenne du récepteur, puis une phase d'entrainement 111 de l'algorithme d'apprentissage est exécutée pour optimiser les paramètres du démodulateur de manière à ce qu'il apprenne à démoduler les symboles correspondant à chaque voie d'émission à partir des observations reçues.

L'invention présente plusieurs avantages par rapport aux démodulateurs basés sur un algorithme du maximum de vraisemblance.

En premier lieu, l'invention ne nécessite pas d'estimation précise du canal de propagation car le réseau de neurones apprend les caractéristiques du canal lors de la phase d'apprentissage en prenant en compte les non linéarités introduites par les détecteurs d'énergie.

Par ailleurs, d'autres non linéarités peuvent être introduites par des imperfections dans les composants réalisant les chaines de réception RF. Un algorithme basé sur le maximum de vraisemblance ne tient pas compte de ces non linéarités.

Références

[1] G. K. Psaltopoulos and A. Wittneben, "Diversity and spatial multiplexing of MIMO amplitude détection receivers," in 2009 IEEE 20th International Symposium on Personal, Indoor and Mobile Radio Communications, Sep.2009, pp. 202-206.

[2] N. Farsad and A. Goldsmith, "Neural network détection of data sequences in communication systems," IEEE Transactions on Signal Processing, vol. 66, no. 21, pp. 5663-5678, 2018.

[3] A. Elrharras, R. Saadane, M. Wahbi, and A. Hamdoun, "Hybrid architecture for spectrum sensing algorithm based on energy détection technique and artificial neural networks," in 2014 5th Workshop on Codes, Cryptography and Communication Systems (WCCCS), 2014, pp. 40-44.

[4] N. Samuel, T. Diskin, A. Wiesel, « Deep MIMO Détection », in 2017 IEEE 18th International Workshop on signal processing advances in wireless communications.

**Revendications**

1. Méthode de réception d'une pluralité de signaux distincts respectivement émis par une pluralité d'antennes d'émission, comprenant les étapes de :

   - Recevoir (101) une pluralité de signaux respectifs sur une pluralité d'antennes de réception,
   - Appliquer (102) une détection d'énergie à chacun des signaux reçus, comportant une détection quadratique et une intégration temporelle
   - Démoduler (103) conjointement les signaux reçus au moyen d'un algorithme d'apprentissage automatique préalablement entrainé (111) pour apprendre à démoduler chaque symbole modulé du signal émis à partir des contributions respectives de ce symbole modulé reçues sur la pluralité d'antennes de réception.

2. Méthode de réception selon la revendication 1 dans laquelle les signaux émis sont modulés en amplitude.

3. Méthode de réception selon l'une quelconque des revendications précédentes dans laquelle l'algorithme d'apprentissage automatique est mis en œuvre (103) au moyen d'au moins un réseau de neurones artificiel recevant en entrée les signaux respectifs reçus sur les antennes de réception et fournissant en sortie une estimée des symboles émis.

**4.** Méthode de réception selon la revendication 3 dans laquelle un réseau de neurones artificiel distinct est mis en œuvre pour démoduler chaque signal émis par une antenne d'émission distincte à partir de tous les signaux respectifs reçus sur les antennes de réception.

**5.** Méthode de réception selon la revendication 3 dans laquelle au moins un réseau de neurones artificiel est mis en œuvre pour démoduler conjointement les signaux émis par plusieurs antennes d'émission.

**6.** Méthode de réception selon l'une quelconque des revendications précédentes comprenant une phase préalable (111) d'entrainement de l'algorithme d'apprentissage automatique sur des symboles pilotes émis par la pluralité d'antennes d'émission.

**7.** Méthode de réception selon la revendication 6 dans laquelle l'algorithme d'apprentissage automatique est entrainé de manière à minimiser un taux d'erreurs entre les symboles démodulés et les symboles émis.

**8.** Méthode de réception selon l'une quelconque des revendications précédentes dans laquelle les signaux émis sont protégés au moyen d'un code correcteur d'erreur et la méthode comprend en outre une étape de décoder (104) les symboles démodulés au moyen d'un décodeur canal appliqué aux symboles démodulés sur les différentes voies de réception concaténés en série.

**9.** Méthode de réception selon l'une quelconque des revendications 1 à 7 dans laquelle les signaux émis sont protégés au moyen d'un code correcteur d'erreur et la méthode comprend en outre une étape de décoder (104) en parallèle les symboles démodulés sur chaque voie de réception, au moyen de plusieurs décodeurs respectifs.

**10.** Méthode de réception selon l'une quelconque des revendications 8 ou 9 dans laquelle le code correcteur est un code algébrique, par exemple un code BCH.

**11.** Récepteur multi-voies comprenant une pluralité d'antennes de réception pour recevoir des signaux distincts respectivement émis par une pluralité d'antennes d'émission, le récepteur comprenant un détecteur d'énergie par voie de réception, comprenant un détecteur quadratique et un intégrateur temporel, et un démodulateur configuré pour démoduler conjointement les signaux reçus au moyen d'un algorithme d'apprentissage automatique préalablement entrainé pour apprendre à démoduler un symbole modulé du signal émis à partir des contributions respectives de ce symbole modulé reçues sur la pluralité d'antennes de réception.

**12.** Récepteur multi-voies selon la revendication 11 comportant un nombre d'antennes de réception supérieur ou égal au nombre d'antennes d'émission.

**13.** Récepteur multi-voies selon l'une quelconque des revendications 11 ou 12 dans lequel le démodulateur comporte un nombre de sorties égal au nombre d'antennes d'émission.

**14.** Récepteur multi-voies selon l'une quelconque des revendications 11 à 13 comprenant en outre un démultiplexeur pour concaténer en série les symboles démodulés sur les différentes sorties du démodulateur et un décodeur canal configuré pour décoder les symboles en sortie du démultiplexeur.

**15.** Récepteur multi-voies selon l'une quelconque des revendications 11 à 13 comprenant en outre un décodeur canal distinct configuré pour décoder les symboles fournis sur chaque sortie respective du démodulateur.

**16.** Récepteur multi-voies selon la revendication 15 dans lequel le taux de codage de chaque décodeur canal est paramétré indépendamment.

FIG.1

FIG.2

FIG.3

FIG.4

FIG.5

FIG.6

FIG.7

FIG.8

```
┌─────────────────────────┐
│    Réception signaux    │⌇⌇ 101
└─────────────────────────┘
            │
            ▼
┌─────────────────────────┐
│    Détection d'énergie   │⌇⌇ 102
└─────────────────────────┘
            │
            ▼
┌─────────────────────────┐
│    Démodulation par      │⌇⌇ 103
│     apprentissage        │
└─────────────────────────┘
            │
            ▼
┌ ─ ─ ─ ─ ─ ─ ─ ─ ─ ─ ─ ─ ┐
│        Décodage          │⌇⌇ 104
└ ─ ─ ─ ─ ─ ─ ─ ─ ─ ─ ─ ─ ┘
```

# FIG.9

```
┌─────────────────────────┐
│ Réception signaux pilotes│⌇⌇ 110
└─────────────────────────┘
            │
            ▼
┌─────────────────────────┐
│    Détection d'énergie   │⌇⌇ 102
└─────────────────────────┘
            │
            ▼
┌─────────────────────────┐
│     Entrainement         │⌇⌇ 111
│     démodulateur         │
└─────────────────────────┘
```

# FIG.10

Europäisches
Patentamt

European
Patent Office

Office européen
des brevets

**RAPPORT DE RECHERCHE EUROPEENNE**

Numéro de la demande

EP 21 17 5998

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/367192 A1 (O`SHEA TIMOTHY JAMES [US] ET AL) 20 décembre 2018 (2018-12-20) * alinéas [0033], [0089], [0137], [0146], [0148], [0169]; figures 5,8,9A * ----- | 1-16 | INV. H04B7/0413 G06N3/02 |
| X | MOHAMMAD DEHGHANI SOLTANI ET AL: "A novel and low complex detection method for MIMO channels: A new perspective", TELECOMMUNICATIONS (IST), 2012 SIXTH INTERNATIONAL SYMPOSIUM ON, IEEE, 6 novembre 2012 (2012-11-06), pages 134-138, XP032346047, DOI: 10.1109/ISTEL.2012.6482971 ISBN: 978-1-4673-2072-6 * pages 3-4 * ----- | 1-16 | |
| A | S-H HWANG ET AL: "Spectrum sensing using multiple antenna-aided energy detectors for cognitive radio", ELECTRICAL AND COMPUTER ENGINEERING, 2009. CCECE '09. CANADIAN CONFERENCE ON, IEEE, PISCATAWAY, NJ, USA, 3 mai 2009 (2009-05-03), pages 209-212, XP031477318, ISBN: 978-1-4244-3509-8 * figures 1,2 * ----- | 1-16 | |

DOMAINES TECHNIQUES
RECHERCHES (IPC)

H04B
G06N

Le présent rapport a été établi pour toutes les revendications

| Lieu de la recherche | Date d'achèvement de la recherche | Examinateur |
|---|---|---|
| Munich | 10 août 2021 | Panahandeh, Ali |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
....................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 17 5998

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-08-2021

| Document brevet cité au rapport de recherche | Date de publication | Membre(s) de la famille de brevet(s) | Date de publication |
|---|---|---|---|
| US 2018367192 A1 | 20-12-2018 | CN 111434049 A | 17-07-2020 |
| | | EP 3642970 A1 | 29-04-2020 |
| | | KR 20200011551 A | 03-02-2020 |
| | | KR 20200126433 A | 06-11-2020 |
| | | US 2018367192 A1 | 20-12-2018 |
| | | US 2019349037 A1 | 14-11-2019 |
| | | US 2021211164 A1 | 08-07-2021 |
| | | WO 2018236932 A1 | 27-12-2018 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G. K. PSALTOPOULOS ; A. WITTNEBEN.** Diversity and spatial multiplexing of MIMO amplitude détection receivers. *2009 IEEE 20th International Symposium on Personal, Indoor and Mobile Radio Communications,* Septembre 2009, 202-206
- **N. FARSAD ; A. GOLDSMITH.** Neural network détection of data sequences in communication systems. *IEEE Transactions on Signal Processing,* 2018, vol. 66 (21), 5663-5678

- **A. ELRHARRAS ; R. SAADANE ; M. WAHBI ; A. HAMDOUN.** Hybrid architecture for spectrum sensing algorithm based on energy détection technique and artificial neural networks. *2014 5th Workshop on Codes, Cryptography and Communication Systems (WCCCS),* 2014, 40-44
- **N. SAMUEL ; T. DISKIN ; A. WIESEL.** Deep MIMO Détection. *2017 IEEE 18th International Workshop on signal processing advances in wireless communications*